# EUROPEAN PATENT APPLICATION

(11) **EP 4 156 771 A1**
(43) Date of publication of application: **29.03.2023**
(21) Application number: 20936937.0
(22) Date of filing: 22.05.2020
(51) Int. Cl.: H04W 28/20, H04W 72/04, H04L 5/00

(54) **METHOD AND DEVICE FOR IDENTIFYING BANDWIDTH, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Hughes, Andrea Michelle
(86) International application number: PCT/CN2020/091925
(87) International publication number: WO 2021/232436

(57) **Abstract**

Provided in the embodiments of the present disclosure are a method and a device for identifying bandwidth, an electronic device, and a storage medium. The method comprises: determining a first message frame, the first message frame comprising bandwidth information, and the bandwidth information being used for making the device receiving the first message frame set the bandwidth for sending a second message frame; and transmitting the first message frame. The method and device for identifying bandwidth provided in the embodiments of the present disclosure enable additional bandwidth to be used in wireless communications, and increase throughput.

## Description

### TECHNICAL FIELD

Embodiments of the present disclosure relate to a field of communication technologies, and particularly to a method and a device for identifying an uplink bandwidth, an electronic device, and a storage medium.

### BACKGROUND

In a wireless local area network (WLAN), from IEEE802.11a/g, a data packet (also referred to as a physical Layer protocol data unit (PPDU)) adopts an orthogonal frequency division multiplexing (OFDM) modulation mode, and the entire transmission bandwidth is allocated to one station (STA). Orthogonal frequency division multiple access (OFDMA) has previously been further introduced into standard IEEE802.11ax on the basis of the OFDM, and the entire bandwidth may be allocated to a plurality of STAs.

In May, 2018, the Institute of Electrical and Electronic Engineers (IEEE) established a study group (SG) IEEE802.11be to study a next generation (IEEE 802. 11a/b/g/n/ac) Wi-Fi technology, the studied content including 320 MHz bandwidth transmission, aggregation and collaboration of a plurality of frequency bands, etc., so that the rate and throughput may be improved by at least four times relative to the existing IEEE 802.11ax standard, which is mainly applied to video transmission, augmented reality (AR), virtual reality (VR), etc.

Aggregation and collaboration of a plurality of frequency bands refer to simultaneous communication between devices in frequency bands of 2.4 GHz, 5.8 GHz and 6-7 GHz, and a new media access control (MAC) mechanism is required to be defined for managing the simultaneous communication between devices in a plurality of frequency bands. In addition, it is also desired to support low latency transmission in IEEE802.11be.

In the existing IEEE802.11ax standard, in order to enable multiple stations to send uplink data frames simultaneously, resources are allocated to stations using a mechanism in which an access point (AP) sends a trigger frame, and the mechanism continues to be adopted in IEEE802.11be.

In the IEEE802.11be standard, the maximum bandwidth 320MHz (160MHz+160MHz) is supported, and in addition, 240MHz (160MHz+80MHz) and a bandwidth supported in the IEEE802.11ax standard are further supported. Since 320MHz (160+160MHz) and 240MHz (160+80MHz) are additionally supported in IEEE802.11be, but the trigger frame defined in the existing IEEE802.11ax standard cannot identify types of bandwidths 320MHz (160+160MHz) and 240MHz (160+80MHz) in the existing IEEE802.11ax standard, the format of the trigger frame needs to be enhanced to meet the requirements of IEEE802.11be.

### SUMMARY

Various aspects of the present disclosure will at least solve the above problems and/or shortcomings. The following technical solution is provided in various embodiments of the present disclosure.

According to one aspect of the embodiment, a method for identifying a bandwidth is provided, and may include: determining a first message frame, in which the first message frame includes bandwidth information, and the bandwidth information is configured such that a device receiving the first message frame sets a bandwidth for sending a second message frame; and transmitting the first message frame.

According to an example embodiment, the bandwidth information includes: a first identifier and/or a second identifier configured to indicate the bandwidth information.

According to an example embodiment, the bandwidth information corresponding to the first identifier is a first value and the bandwidth information corresponding to the second identifier is a second value, and the bandwidth is a first type of bandwidth.

According to an example embodiment, the bandwidth information corresponding to the first identifier is a third value and the bandwidth information corresponding to the second identifier is a fourth value, and the bandwidth is a second type of bandwidth.

According to an example embodiment, the first message frame further includes: a third identifier configured to indicate a type of the first message frame.

According to an example embodiment, the third identifier is configured to indicate whether to continue decoding the first message frame.

According to an example embodiment, the second message frame includes: a fourth identifier and/or a fifth identifier configured to indicate the bandwidth information.

According to an example embodiment, the bandwidth information corresponding to the fourth identifier is a fifth value and the bandwidth information corresponding to the fifth identifier is a sixth value in response to the bandwidth information corresponding to the first identifier being a first value and the bandwidth information corresponding to the second identifier being a second value, and the bandwidth being a first type of bandwidth.

According to an example embodiment, the bandwidth information corresponding to the fourth identifier is a seventh value and the bandwidth information corresponding to the fifth identifier is an eighth value in response to the bandwidth information corresponding to the first identifier being a third value and the bandwidth information corresponding to the second identifier being a fourth value, and the bandwidth being a second type of bandwidth.

According to an example embodiment, the first type of bandwidth is 240MHz or 160+80MHz, and the second type of bandwidth is 320MHz or 160+160MHz.

According to another aspect of the embodiment, a method for identifying a bandwidth is provided, and may include: receiving a first message frame, in which the first message frame includes bandwidth information; determining a second message frame based on the bandwidth information; setting a bandwidth for sending the second message frame based on the bandwidth information and sending the second message frame.

According to an example embodiment, the bandwidth information includes: a first identifier and/or a second identifier configured to indicate the bandwidth information.

According to an example embodiment, the bandwidth information corresponding to the first identifier is a first value and the bandwidth information corresponding to the second identifier is a second value, and the bandwidth is a first type of bandwidth.

According to an example embodiment, the bandwidth information corresponding to the first identifier is a third value and the bandwidth information corresponding to the second identifier is a fourth value, and the bandwidth is a second type of bandwidth.

According to an example embodiment, the first message frame further includes: a third identifier configured to indicate a type of the first message frame.

According to an example embodiment, the third identifier is configured to indicate whether to continue decoding the first message frame.

According to an example embodiment, the second message bandwidth includes: a fourth identifier and/or a fifth identifier configured to indicate the bandwidth information.

According to an example embodiment, determining a second message frame based on the bandwidth information, includes: the bandwidth information corresponding to the fourth identifier is a fifth value and the bandwidth information corresponding to the fifth identifier is a sixth value in response to the bandwidth information corresponding to the first identifier being a first value and the bandwidth information corresponding to the second identifier being a second value.

According to an example embodiment, determining a second message frame based on the bandwidth information, includes: the bandwidth information corresponding to the fourth identifier is a seventh value and the bandwidth information corresponding to the fifth identifier is an eighth value in response to the bandwidth information corresponding to the first identifier being a third value and the bandwidth information corresponding to the second identifier being a fourth value.

According to another aspect of the present disclosure, a device for identifying a bandwidth is provided, and may include: a processing module, configured to determine a first message frame, in which the first message frame includes bandwidth information, and the bandwidth information is configured such that a device receiving the first message frame sets a bandwidth for sending a second message frame; and a communication module, configured to transmit the first message frame.

According to another aspect of the present disclosure, a device for identifying a bandwidth is provided, and may include: a receiving module, configured to receive a first message frame, in which the first message frame includes bandwidth information; a processing module, configured to determine a second message frame based on the bandwidth information; and a sending module, configured to set a bandwidth for sending the second message frame based on the bandwidth information and send the second message frame.

According to another aspect of the present disclosure, an electronic device is provided. The electronic device includes a memory, a processor and a computer program stored on the memory and executable on the processor, wherein when the processor executes the computer program, the above method is implemented.

According to another aspect of the present disclosure, a computer readable storage medium is provided. The computer readable storage medium is stored with a computer program, wherein when the computer program is executed by a processor, the above method is implemented.

The method, the device and the electronic device provided in embodiments of the present disclosure not only can identify a bandwidth in an existing standard, but also can identify an additional bandwidth in an advanced standard, so that an additional bandwidth can be applied in wireless communication, which improves throughput and achieves backward compatibility.

### BRIEF DESCRIPTION OF THE DRAWINGS

The above and additional features in the embodiments of the present disclosure will be more obvious by describing example embodiments in the present disclosure referring to attached drawings.
FIG. 1 is a diagram illustrating an example of wireless local area network (WLAN) deployment;
FIG. 2 is a flowchart illustrating a method for identifying a bandwidth according to an embodiment of the present disclosure;
FIG. 3 is a flowchart illustrating another method for identifying a bandwidth according to an embodiment of the present disclosure;
FIG. 4 is a diagram illustrating an example of a trigger message frame;
FIG. 5 is a diagram illustrating a device for identifying a bandwidth according to an embodiment of the present disclosure;
FIG. 6 is a diagram illustrating another device for identifying a bandwidth according to an embodiment of the present disclosure.

Similar reference numerals are configured to describe the same or similar elements, features and structures throughout attached drawings.

### DETAILED DESCRIPTION

The following description is provided with reference to attached drawings to facilitate comprehensive understanding of various embodiments of the present disclosure as defined by attached claims and their equivalents. Various embodiments of the present disclosure include various details, however, the details are considered as exemplary only. In addition, descriptions of well-known functions and structures may be omitted for clarity and conciseness.

The terms and words used in the present disclosure are not limited to written meanings, but only used by the inventors for the purpose of understanding the present disclosure clearly and consistently. Therefore, for those skilled in the art, the description of various embodiments in the present disclosure is provided only for illustration rather than for limitation.

It should be understood that the singular forms "a", "an", "said" and "the" used herein may also include plural forms, unless the context clearly indicates otherwise. It should be further understood that the expression "comprising" used herein refers to the presence of the described features, integers, steps, operations, elements and/or components, but does not preclude the presence or addition of one or more other features, integers, steps, operations, elements, components, and/or their groups.

It should be understood that, although the terms "first", "second", etc. may be configured to describe various elements, the elements shall not be limited by the terms. The terms are only configured to distinguish one element from another. Thus, the first element discussed below may be referred to as a second element without departing from the teachings of the example embodiments.

It should be understood that, when an element is referred to as "connected" or "coupled" to another element, it may be directly connected or coupled to other elements, or a middle element may also be present. In addition, "connected" or "coupled" as used herein may include wireless connection or wireless coupling. The term "and/or" used herein includes any and all combinations of one or more related listed items.

In order to make the purpose, features and advantages of the embodiments of the present disclosure more clear, embodiments of the present disclosure will be described below in connection with the attached drawings.

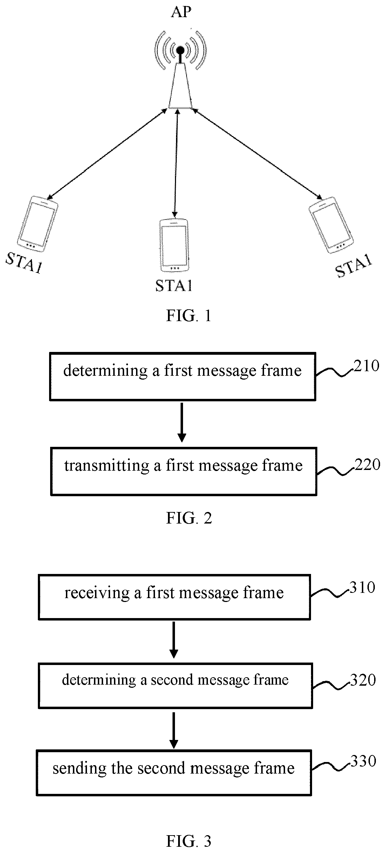

FIG. 1 is a diagram illustrating an example of wireless local area network (WLAN) deployment.

A WLAN may include one or more access points (AP) and one or more stations (STA) in communication with the corresponding APs. Although FIG. 1 only illustrates one AP and three STAs (STA1 to STA3) in communication with the AP, it is only illustrative, which is not limited in embodiments of the present disclosure.

The AP may include a software application and/or a circuit to enable other types of nodes in the wireless network to communicate with the exterior and interior of the wireless network through the AP. The AP may perform uplink and downlink transmissions with STAs on different time-frequency resources, and the AP may send a frame or packet to a corresponding STA and receive a frame or packet from the corresponding STA to transmit data and/or control information.

In some examples, the AP may be a terminal device or a network device equipped with a Wi-Fi (Wireless Fidelity) chip. As an example, the STA may include but not limited to a cellular phone, a smart phone, a wearable device, a computer, a personal digital assistant (PDA), a personal communication system (PCS) device, a personal information manager (PIM), a personal navigation device (PND), a global positioning system (GPS), a multimedia device, an Internet of Things (IoT) device, etc.

It needs to be noted that the bandwidths supported in an existing IEEE802.11ax standard include 20MHz, 40MHz, 80MHz, 160 (80+80)MHz; however, 240(160+80)MHz and 320(160+160) MHz may be supported in a subsequent IEEE802.11be standard. In various embodiments of the present disclosure, illustration is made by taking the above candidate bandwidth values as an example. However, it needs to be noted that, the specific values of the candidate bandwidth values are only illustrative, rather than a limitation of the scope of embodiments of the present disclosure. In embodiments of the present disclosure, candidate bandwidth values supported by different standards are not limited; any candidate bandwidth value is within the protection scope of embodiments of the present disclosure.

Examples of communication between an AP and an STA are described referring to FIG. 2 to FIG. 10.

FIG. 2 illustrates a method for identifying a bandwidth according to an embodiment of the present disclosure. The method of FIG. 2 may be performed by a control terminal device. In embodiments of the present disclosure, the control terminal device includes but not limited to an AP or any type of controller.

As illustrated in FIG. 2, a first message frame is determined at step 210. As an example, the type of the first message frame may be any one of the items illustrated in Table 2: Basic, Beamforming Report Poll (BFRP), MU-BAR (multiuser-block acknowledgement request), MU-RTS (multiuser-request to send), Buffer Status Report Poll (BSRP), GCR MU-BAR, Bandwidth Query Report Poll (BQRP), NDP Feedback Report Poll (NFRP), a new type of trigger frame (Reserved). However, these are only illustrative, which are not limited in embodiments of the present disclosure. The new type of trigger frame may indicate a frame defined by a reserved bit different from an existing type of trigger frame, which will be described in detail below. According to an example embodiment, the first message frame includes bandwidth information, and the bandwidth information is configured to indicate to a receiving terminal device receiving the first message frame, a bandwidth for sending a second message frame. For example, the device receiving the first message frame may be an example of the STA as described in FIG. 1. In an embodiment of the present disclosure, the control terminal device may determine the bandwidth information by itself, for example, determine the bandwidth information based on at least one of the followings: a network condition, a load condition, a hardware capability of the control terminal device, a hardware capability of the receiving terminal device, a service type, and a related protocol provision, which are not specifically limited in embodiments of the present disclosure. In an embodiment of the present disclosure, the control terminal device further may obtain the bandwidth information from an external device, which is not specifically limited in embodiments of the present disclosure.

In some embodiments of the present disclosure, the control terminal device may generate the first message frame based on the bandwidth information determined by itself. In some embodiments of the present disclosure, the control terminal device may generate the first message frame based on the bandwidth information obtained from the external device. In some embodiments of the present disclosure, the control terminal device may obtain the first message frame from an external device, in which the first message frame is generated by the external device based on the bandwidth information, and the bandwidth information may be determined by the control terminal device or the external device or any device. This is not specifically limited in embodiments of the present disclosure. In various embodiments of the present disclosure, different bits of the second identifier may correspond to different parameter values, while the correspondence relationship may be determined by the control terminal device and sent to the receiving terminal device, and also may be stipulated by a protocol, negotiated by the control terminal device and the receiving terminal device, or determined by the receiving terminal device and reported to the control terminal device. Different values of the second identifier may correspond to different parameter values, while the correspondence relationship may be determined by the control terminal device and sent to the receiving terminal device, and also may be stipulated by a protocol, negotiated by the control terminal device and the receiving terminal device, or determined by the receiving terminal device and reported to the control terminal device.

According to an embodiment of the present disclosure, the bandwidth information may include: a first identifier and/or a second identifier configured to indicate the bandwidth information. In other words, the first identifier and/or the second identifier may be configured to indicate the bandwidth information separately or together, representing the bandwidth size that can be supported in wireless communication. The bandwidth size may include: a bandwidth defined in a currently established wireless communication standard (for example, 20MHz, 40MHz, 80MHz, 160 (80+80) MHz in the IEEE802.11ax standard), and/or a bandwidth defined in a more advanced wireless communication standard being formulated or to be formulated (for example, 240 (160+80) MHz, 320 (160+160) MHz in the IEEE802.11be standard). In embodiments of the present disclosure, the first identifier and the second identifier may be used together to indicate the bandwidth for sending the second message frame, so that the receiving terminal device receiving the first message frame determines the bandwidth for sending the second message frame.

In an embodiment of the present disclosure, the first identifier may be an identifier for indicating the bandwidth defined in a currently established wireless communication standard, for example, the first identifier may be a flag bit configured to indicate UL BW in the existing IEEE802.11ax standard, which includes 2 bits, to indicate that the bit widths include 20MHz, 40MHz, 80MHz, 160 (80+80) MHz. The second identifier may be used together with the first identifier to determine the bandwidth information, so that the first identifier and the second identifier jointly indicate the bandwidth for sending the second message frame.

In some embodiments, the bandwidth for sending the second message frame may be determined by a bandwidth corresponding to the first identifier + a bandwidth corresponding to the second identifier. For example, the bandwidth corresponding to the first identifier is 160 MHz, and the bandwidth corresponding to the second identifier is 80 MHz, then the receiving terminal may determine from the first identifier and the second identifier that the bandwidth for sending the second message frame is 160+80=240MHz. In addition, other bandwidths in addition to 240 (160+80) MHz and 320 (160+160) MHz may be supported in a more advanced standard. As an example, other bandwidth may be 200 MHz. In this case, when the bandwidth corresponding to the first identifier is 160 MHz, the second identifier may indicate other bandwidths by different values corresponding to the bit number greater than 1 bit. For example, the second identifier may include 2 bits. When the bandwidth corresponding to the first identifier is 160 MHz and the value "01" of the second identifier corresponds to 40 MHz, the first identifier and the second identifier may together indicate a bandwidth of 200 (160+40) MHz.

In various embodiments of the present disclosure, different bits of the second identifier may correspond to different parameter values, while the correspondence relationship may be determined by the control terminal device and sent to the receiving terminal device, and also may be stipulated by a protocol, negotiated by the control terminal device and the receiving terminal device, or determined by the receiving terminal device and reported to the control terminal device. Different values of the second identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device.

In some embodiments, the bandwidth for sending the second message frame may be determined from the bandwidth corresponding to the first identifier × a value corresponding to the second identifier. For example, the bandwidth corresponding to the first identifier is 80MHz, and the value corresponding to the second identifier is 3, the receiving terminal may determine from the first identifier and the second identifier that the bandwidth for sending the second message frame is 80×3=240 MHz. For another example, the bandwidth corresponding to the first identifier is 160MHz, and the value corresponding to the second identifier is 2, the receiving terminal may determine from the first identifier and the second identifier that the bandwidth for sending the second message frame is 160×2=320 MHz. In some embodiments, since 240 (160+80) MHz and 320 (160+160) MHz are supported in the IEEE802.11be standard, the second identifier may correspond to different values by 1 bit, to indicate the bandwidth information through the bandwidth corresponding to the first identifier × the value corresponding to the second identifier. For example, when 1 bit of the second identifier is a first indication value, and the corresponding value is 3, the receiving terminal device may determine that the bandwidth for sending the second message frame is 80×3=240 MHz when receiving the second identifier. For another example, when 1 bit of the second identifier is a second indication value, and the corresponding value is 2, the receiving terminal device may determine that the bandwidth for sending the second message frame is 160 × 2 = 320 MHz when receiving the second identifier. In some embodiments, the first indication value may be 0 and the second indication value may be 1; in some embodiments, the first indication value may be 1 and the second indication value may be 0. Of course, the above values are only illustrative, rather than a limitation of the protection scope of the present disclosure. For example, the bandwidth corresponding to the first identifier may be any one of 20MHz, 40MHz, 80MHz and 160MHz, while the value corresponding to the second identifier may be set correspondingly, so that the bandwidth corresponding to the first identifier × the value corresponding to the second identifier may indicate 240MHz, 320MHz. Richer bandwidth information may be indicated through different first identifiers and second identifiers.

Moreover, the bandwidth corresponding to the first identifier + the bandwidth corresponding to the second identifier and the bandwidth corresponding to the first identifier × the value corresponding to the second identifier only illustrate the implementation of determining the bandwidth for sending the second message frame from the first identifier and the second identifier, rather than limiting the protection scope of the present disclosure. In various embodiments of the present disclosure, different bits of the second identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device. Different values of the second identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device.

In addition, according to embodiments of the present disclosure, the first identifier and the second identifier may be included in different fields of the first message frame. However, this is not limited in embodiments of the present disclosure, for example, the first identifier and the second identifier may be included in the same field, and in other words, the first identifier and the second identifier may be different bits in one field. In addition, the first identifier and the second identifier may respectively have one or more bits, which is not limited in the present disclosure.

According to an embodiment of the present disclosure, the bandwidth information may include a first identifier configured to indicate bandwidth information, in which the first identifier is a field greater than 2 bits. That is, bandwidth information is indicated using the first identifier. In an existing standard, the bandwidth information is indicated using a UL BW field of 2 bits, that is, four values corresponding to 2 bits as illustrated in Table 1 are used to respectively indicate 20MHz, 40MHz, 80MHz, 160 (80+80) MHz in the IEEE802.11ax standard. In an embodiment of the present disclosure, bandwidth information is indicated using a field greater than 2 bits. For example, when the first identifier is 3 bits, the corresponding eight values indicate bandwidth information: 20MHz, 40MHz, 80MHz, 160 (80+80) MHz, 240 (160+80) MHz, 320 (160+160) MHz, and further may include other bandwidth information. The first identifier may be an extended UL BW field or any one of other fields. Different bits of the first identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device. Different values of the first identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device.

According to an embodiment of the present disclosure, the bandwidth information may include: a first identifier configured to indicate the bandwidth information. In some embodiments, the first identifier may be one field of a trigger frame, for example, a reserved field B63. The reserved field may be of any byte length to indicate that the bandwidths for sending the second message include 240 (160+80) MHz, 320 (160+160) MHz supported in the IEEE802.11be standard. In various embodiments of the present disclosure, different bits of the first identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device. Different values of the first identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device.

A method for identifying a bandwidth is provided in embodiments of the present disclosure, and includes:
determining a first message frame, in which the first message frame at least includes a first identifier;
determining an indication message frame, in which the indication message frame at least includes a second identifier;
sending the first message frame and the indication message frame to a receiving terminal device, in which the first message frame and the indication message frame are configured to indicate a bandwidth for sending a second message frame.

In some embodiments, the first message frame and the indication message frame may be included in the same signaling, and sent to the receiving terminal device together. For example, the first message frame and the indication message frame may be two fields of a trigger frame.

In some embodiments, the first message frame and the indication message frame may be included in two different signalings, and sent to the receiving terminal device together or separately. For example, the first message frame may be one field of the trigger frame; and the indication message frame may be one field of any appropriate message frame or signaling.

In an embodiment of the present disclosure, the first identifier may be an identifier configured to indicate a bandwidth defined in a currently established wireless communication standard. For example, the first identifier may be a flag bit configured to indicate UL BW in the existing IEEE802.11ax standard. The flag bit includes 2 bits, and the values are correspondingly configured to indicate that the bandwidths are 20MHz, 40MHz, 80MHz, 160 (80+80) MHz. The second identifier may be configured to determine the bandwidth information together with the first identifier.

In some embodiments, the bandwidth for sending the second message frame may be determined from the bandwidth corresponding to the first identifier + the bandwidth corresponding to the second identifier. For example, the bandwidth corresponding to the first identifier is 160 MHz, and the bandwidth corresponding to the second identifier is 80 MHz, then the receiving terminal may determine from the first identifier and the second identifier that the bandwidth for sending the second message frame is 160+80=240MHz.

In some embodiments, the bandwidth for sending the second message frame may be determined from the bandwidth corresponding to the first identifier × the value corresponding to the second identifier. For example, the bandwidth corresponding to the first identifier is 80MHz, and the value corresponding to the second identifier is 3, the receiving terminal may determine from the first identifier and the second identifier that the bandwidth for sending the second message frame is 80×3=240 MHz. For another example, the bandwidth corresponding to the first identifier is 160MHz, and the value corresponding to the second identifier is 2, the receiving terminal may determine from the first identifier and the second identifier that the bandwidth for sending the second message frame is 160×2=320 MHz. In some embodiments, since 240 (160+80) MHz and 320 (160+160) MHz are supported in the IEEE802.11be standard, the second identifier may correspond to different values by 1 bit, to indicate the bandwidth information through the bandwidth corresponding to the first identifier × the value corresponding to the second identifier. For example, when 1 bit of the second identifier is a first indication value, and the corresponding value is 3, the receiving terminal device may determine that the bandwidth for sending the second message frame is 80×3=240 MHz when receiving the second identifier. For another example, when 1 bit of the second identifier is a second indication value, and the corresponding value is 2, the receiving terminal device may determine that the bandwidth for sending the second message frame is 160 × 2 = 320 MHz when receiving the second identifier. In some embodiments, the first indication value may be 0 and the second indication value may be 1; in some embodiments, the first indication value may be 1 and the second indication value may be 0. Of course, the above values are only illustrative, rather than a limitation of the protection scope of the present disclosure. For example, the first identifier may be any one of 20MHz, 40MHz, 80MHz and 160MHz, while the value corresponding to the second identifier may be set correspondingly, so that the bandwidth corresponding to the first identifier × the value corresponding to the second identifier can indicate 240MHz, 320MHz. Richer bandwidth information can be indicated by different first identifiers and second identifiers.

Moreover, the bandwidth corresponding to the first identifier + the bandwidth corresponding to the second identifier and the bandwidth corresponding to the first identifier × the value corresponding to the second identifier only illustrate the implementation of determining the bandwidth for sending the second message frame from the first identifier and the second identifier, rather than limiting the protection scope of the present disclosure. In various embodiments of the present disclosure, different bits of the second identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device. Different values of the second identifier may correspond to different parameter values, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device.

According to an embodiment of the present disclosure, the bandwidth information corresponding to the first identifier is a first value and the bandwidth information corresponding to the second identifier is a second value, to indicate the device receiving the first message frame to set the bandwidth for sending the second message frame as a first type of bandwidth. According to an embodiment of the present disclosure, the bandwidth information corresponding to the first identifier is a third value and the bandwidth information corresponding to the second identifier is a fourth value, and the device receiving the first message frame sets the bandwidth for sending the second message frame as a second type of bandwidth. In an example, the first value and the third value may be the same, and the second value and the fourth value may be different. In some embodiments, the second value and the fourth value may be 0, and also may not be 0.

For example, the bandwidth information may be 20MHz, 40MHz, 80MHz, 160 (80+80) MHz in the IEEE802. 1 1ax standard. That is, when the first value of the first identifier is any one of 20MHz, 40MHz, 80MHz, 160 (80+80) MHz in the IEEE802.11ax standard, and the second value corresponding to the second identifier is 0, then the receiving terminal device is indicated to send the second message frame using any one of 20MHz, 40MHz, 80MHz, 160 (80+80) MHz adopted in the IEEE802.11ax standard.

For example, the bandwidth information may be 240 (160+80) MHz, 320 (160+160) MHz in the IEEE802.11be standard. That is, when the third value of the first identifier sent is any one of 20MHz, 40MHz, 80MHz, 160 (80+80) MHz in the IEEE802.1 1ax standard, and the fourth value corresponding to the second identifier is not 0, the receiving terminal device is indicated to send the second message frame using any one of 240 (160+80) MHz and 320 (160+160) MHz adopted in the EEE802.11be standard.

In some embodiments, bandwidth information corresponding to the first identifier is a first value and there is no second identifier, then the device receiving the first message frame is indicated to set the bandwidth for sending the second message frame as one of 20MHz, 40MHz, 80MHz, 160 (80+80) MHz in the IEEE802.11ax standard.

In some embodiments, the bandwidth information corresponding to the first identifier is a third value, and there is a second identifier, then the device receiving the first message frame is indicated to set the bandwidth for sending the second message frame as one of 240 (160+80) MHz and 320 (160+160) MHz in the EEE802.11be standard.

In various embodiments of the present disclosure, different bits of the second identifier may correspond to different bandwidth information, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device. Different values of the second identifier may correspond to different bandwidth information, while the correspondence relationship may be determined by the control terminal device and sent to the receiving terminal device, and also may be stipulated by the protocol, negotiated by the control terminal device and the receiving terminal device, or determined by the receiving terminal device and reported to the control terminal device.

In one example, the first type of bandwidth and the second type of bandwidth may correspondingly be a bandwidth defined in an existing wireless communication standard and/or a bandwidth defined in a more advanced wireless communication standard. The bandwidths defined in the existing wireless communication standard may include, for example, 20MHz, 40MHz, 80MHz, 160 (80+80) MHz in the IEEE802.11ax standard; the bandwidths defined in the more advanced wireless communication standard may include, for example, 240 (160+80) MHz and 320 (160+160) MHz in the EEE802.11be standard. That is, the first type of bandwidth and the second type of bandwidth correspondingly may be any one of the followings: 20MHz, 40MHz, 80MHz, 160 (80+80) MHz, 240 (160+80) MHz and 320 (160+160) MHz. In one embodiment of the present disclosure, the first type of bandwidth may be 240 MHz, and the second type of bandwidth may be 320 MHz.

According to an embodiment of the present disclosure, the first message frame may further include: a third identifier configured to indicate a type of the first message frame. The third identifier may solve a backward compatibility problem. For example, the third identifier may indicate a type of a first message frame, so that the receiving terminal device receiving the first message frame determines whether communication using the bandwidth indicated in the first message frame is supported. As an example, the third identifier may be configured to indicate whether to continue decoding the first message frame. That is, when the device receiving the first message frame receives the first message frame, the third identifier is decoded first, and when it is determined based on the third identifier that the device does not support communication using the bandwidth indicated in the first message frame, in this case, the device no longer continues decoding other contents of the first message frame, that is, gives up decoding the first message frame. In addition, when the device receiving the first message frame determines based on the third identifier that communication using the bandwidth indicated in the first message frame is supported, the device continues decoding other contents of the first message frame, to decode the first identifier and the second identifier, and sets based on the first identifier and the second identifier whether the bandwidth for sending the second message frame is the first type of bandwidth or the second type of bandwidth.

At step 220, the first message frame may be transmitted. For example, the control terminal device (for example, AP) transmits the first message frame determined to the receiving terminal device (for example, STA). The receiving terminal device receiving the first message frame sets the bandwidth for sending the second message frame based on the first message frame, which will be described as illustrated in FIG. 3.

FIG. 3 illustrates a method for identifying a bandwidth according to an embodiment of the present disclosure. The method of FIG. 3 may be a method performed by a receiving terminal device. In some embodiments, the receiving terminal device may be a STA.

As illustrated in FIG. 3, at step 310, a first message frame is received. Specifically, the receiving terminal device may receive the first message frame including bandwidth information as described above, which will be omitted for conciseness.

At step 320, a second message frame is determined. Specifically, the STA may determine the second message frame based on the bandwidth information included in the first message frame. According to an example embodiment, the second message frame may include: a fourth identifier and/or a fifth identifier configured to indicate the bandwidth information. According to an embodiment of the present disclosure, the fourth identifier and the fifth identifier may be included in different fields of the second message frame. However, this is not limited in embodiments of the present disclosure. For example, the fourth identifier and the fifth identifier also may be included in the same field. In addition, the fourth identifier and the fifth identifier may respectively have one or more bits, which is not limited in the present disclosure.

According to an example embodiment of the present disclosure, determining the second message frame based on the bandwidth information may include: setting the fourth identifier and/or the fifth identifier in the second message frame based on the first identifier and the second identifier of the bandwidth information included in the first message frame. Specifically, the bandwidth information corresponding to the fourth identifier is determined as a fifth value and the bandwidth information corresponding to the fifth identifier is a sixth value in response to the bandwidth information corresponding to the first identifier being a first value and the bandwidth information corresponding to the second identifier being a second value (that is, the first type of bandwidth); the bandwidth information corresponding to the fourth identifier is a seventh value and the bandwidth information corresponding to the fifth identifier is an eighth value in response to the bandwidth information corresponding to the first identifier being a third value and the bandwidth information corresponding to the second identifier being a fourth value (that is, the second type of bandwidth). As an example, the fifth value and the seventh value may be the same, and the sixth value and the eighth value may be different. However, these are only illustrative, which are not limited in the embodiment of the present disclosure.

In addition, the fourth identifier may further solve a backward compatibility problem, which will be described in detail below.

At step 330, a bandwidth for sending the second message frame is set based on the bandwidth information and the second message frame is sent. Specifically, the STA may set the bandwidth for sending the second message frame based on the bandwidth information in the received first message frame, and send the second message frame to the AP using the set bandwidth.

The methods of FIG. 2 and FIG. 3 are described below by taking the first message frame being a trigger message frame sent by an AP and the second message frame being a TB (trigger-based)-PPDU sent by the STA as an example. However, this is only illustrative, which is not limited in embodiments of the present disclosure, and other forms of the first message frame and the second message frame are feasible.

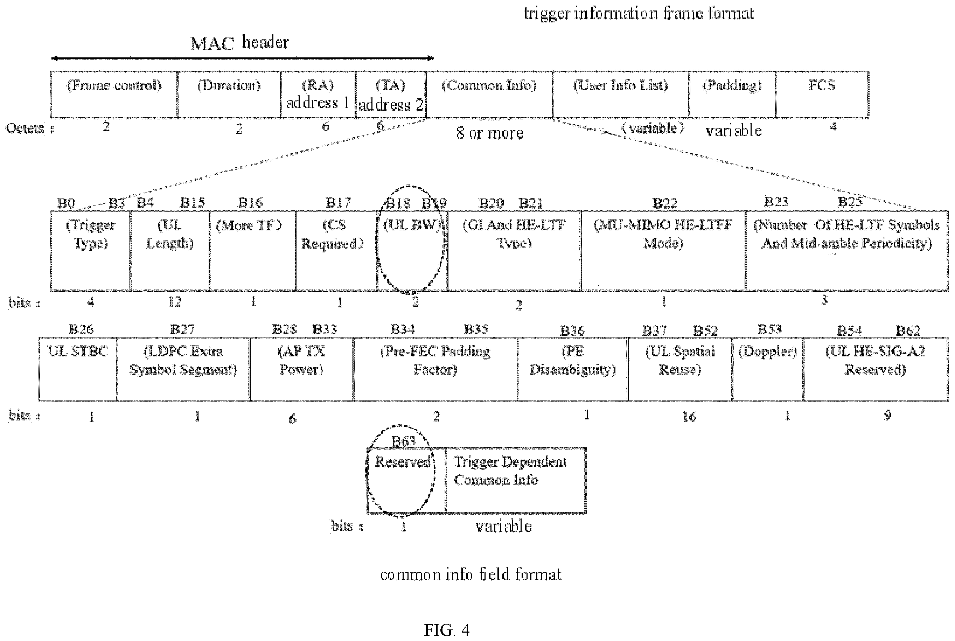

As described above, the AP allocates a bandwidth resource for a STA by sending a trigger message frame. FIG. 4 is a diagram illustrating an example of a trigger message frame. However, it should be understood that the format of the trigger message frame as illustrated in FIG. 4 is only illustrative, which is not limited in embodiments of the present disclosure.

As illustrated in FIG. 4, the UL BW subfield in the existing trigger message frame includes two bits, and only four bandwidth types (that is, 20MHz, 40MHz, 80MHz, 160 (80+80) MHz) as illustrated in Table 1 may be identified at most, however, additional bandwidths (for example, 240 (160+80) MHz, 320 (160+160) MHz) that can be supported by a more advanced standard (for example, the IEEE802.11be standard) cannot be identified. For this, as illustrated in a dotted part of FIG. 4, according to an example embodiment of the present disclosure, the UL BW subfield and reserved bit in the common info field of the trigger message frame may be configured to identify a bandwidth.

**Table 1**

| UL BW subfield value | description |
|---|---|
| 0 | 20MHz |
| 1 | 40MHz |
| 2 | 80MHz |
| 3 | 80+80MHz or 160MHz |

According to an example embodiment of the present disclosure, the trigger message frame as illustrated in FIG. 4 may be taken as the first message frame determined at step 210, and the common info field as illustrated in FIG. 4 may be taken as bandwidth information in the first message frame. According to an embodiment of the present disclosure, the UL BW subfield and reserved bit in the common info field may be correspondingly taken as the first identifier and the second identifier. In other words, according to an example embodiment of the present disclosure, the first identifier may indicate a subfield identifying a bandwidth in a current info field, and the second identifier may indicate an additional bit configured to identify an additional bandwidth. According to an example embodiment of the present disclosure, with the first identifier and the second identifier, not only the bandwidth supported in an existing standard (for example, the IEEE802.11ax standard) can be identified, but also the additional bandwidth supported in a more advanced standard (for example, the IEEE802.11be standard) can be identified. Although the dotted part in FIG. 4 illustrates that the reserved bit only has 1 bit, it is only illustrative, which is not limited in embodiments of the present disclosure.

According to an example of the present disclosure, the UL BW subfield may be set to "00" (for example, the above first value), and the reserved bit may be set to "0" (for example, the above second value), in this case, the UL BW subfield and the reserved bit identify a 240 (160+80MHz) bandwidth (for example, the above first type of bandwidth). According to another example of the present disclosure, the UL BW subfield may be set to "00" (for example, the above third value), and the reserved bit may be set to "1" (for example, the above fourth value), in this case, the UL BW subfield and the reserved bit identify a 320 (160+160MHz) bandwidth (for example, the above second type of bandwidth). It should be understood that, the values of the UL BW subfield and the reserved bit are illustrative, which are not limited in embodiments of the present disclosure.

Since in the existing IEEE802.11ax standard, when the UL BW subfield is set to "00", it indicates that 20MHz uplink bandwidth is supported, in order to prevent a device in the IEEE802.11ax standard (the device cannot support a more advanced standard) from decoding incorrectly when receiving the trigger message frame and in order for backward compatibility, a new trigger frame type may be defined by a third identifier included in bandwidth information according to an example embodiment of the present disclosure.

As an example, a new trigger frame type may be defined by a trigger type subfield in the common info field, as illustrated in FIG. 4 and the below Table 2. Specifically, the reserved bit in the trigger type subfield may be taken as the above third identifier, to define a new trigger frame type, and the reserved bit may be referred to as a new trigger frame type bit. The new trigger frame type bit is correspondingly set with the above first identifier and the second identifier, to represent the first type of bandwidth or the second type of bandwidth. The value of the new trigger frame type bit may be any value (as a non-restrictive example, may be any value of 8 to 15 as illustrated in Table 2) that may be distinguished from the value (for example, 1 to 7 in Table 2) of the existing trigger frame type, which is not specifically limited in the present disclosure.

**Table 2. Trigger Frame Type Subfield Code**

| Trigger Type subfield value | Trigger frame variant |
|---|---|
| 0 | Basic |
| 1 | Beamforming Report Poll (BFRP) |
| 2 | MLT-BAR |
| 3 | MU-RTS |
| 4 | Buffer Status Report Poll (BSRP) |
| 5 | GCR MU-BAR (Groupcast with retries MU-BAR) |
| 6 | Bandwidth Query Report Poll (BQRP) |
| 7 | NDP Feedback Report Poll (NFRP) |
| 8 - 15 | new trigger frame type (Reserved) |

When a Trigger Type subfield is detected by a device in the IEEE 802.11ax standard, it is determined as a reserved frame format (that is, the new trigger frame type), that is, the bandwidth information indicated by the trigger message frame is the first type of bandwidth (240 MHz) or the second type of bandwidth (320 MHz). Since the device in the IEEE802. 1 1 ax standard cannot sends a second message frame using the first type of bandwidth or the second type of bandwidth identified in the trigger message frame received, the device gives up decoding the remainder of the trigger message frame. In other words, the new trigger frame type bit (that is, the third identifier) is configured to indicate whether to continue decoding the trigger message frame (for example, the first message frame). According to an example embodiment of the present disclosure, with the third identifier, compatibility of a receiving terminal device in different standards can be achieved, and errors in decoding can be avoided.

When the AP sends the trigger message frame as the first message frame described with reference to FIG. 4 and Table 2, the STA may determine TB-PPDU to be sent based on the received trigger message frame. According to an embodiment of the present disclosure, TB-PPDU may have various formats, for example, TB-PPDU may include a signaling field. Specifically, the STA may set a subfield in the signaling field in the TB-PPDU based on the bandwidth information in the trigger message frame (for example the bandwidth indicated by the first identifier and the second identifier together).

In an embodiment of the present disclosure, the second message frame TB-PPDU may include at least one of the following identifiers: a fourth identifier, a fifth identifier, and a sixth identifier.

As one example, the below Table 3 illustrates an example of a signaling field in TB-PPDU. As illustrated in Table 3, according to an example embodiment of the present disclosure, B23 and B7 in the signaling field (for example, HE-SIG-A) may be set based on the first identifier and the second identifier, in which, B23 and B7 may be correspondingly included in a first signaling subfield (for example, HE-SIG-A2) and a second signaling subfield (for example, HE-SIG-A1) as a part of the signaling field (for example, HE-SIG-A). As one example, in combination with the method described in FIG. 3, B23 may be an example of the fourth identifier, and B7 may be an example of the fifth identifier. However, it is only illustrative, which is not limited in the embodiment of the present disclosure. For example, the signaling field (for example, HE-SIG-A) may not be divided into two parts, and in addition, other subfields in the signaling field other than the fourth identifier (for example, B23) and/or the fifth identifier (for example, B7) may also be set based on the first identifier and the second identifier.

As illustrated in FIGS. 2 to 6, as an example, in response to the trigger message frame indicating that the bandwidth information is a first type of bandwidth 240 MHz (i.e., the UL BW subfield and reserved bit in the trigger message frame are correspondingly set to the first value "00 " and the second value "0"), B23 and B7 in the signaling field may be set to a fifth value (for example, "0") and a sixth value (for example, "0") for identifying that the second message frame uses a 240 (160 +80) MHz bandwidth. In addition, in response to the trigger message frame indicating that the bandwidth information is a first type of bandwidth 320 MHz (i.e., the UL BW subfield and the reserved bit in the trigger message frame are set to a third value "00" and a fourth value "1"), B23 and B7 in the signaling field may be set to a seventh value (for example, "0") and an eighth value (for example, "1") for identifying a 320 (160 +160) MHz bandwidth. However, it is only illustrative, which is not limited in embodiments of the present disclosure. Of course, it is possible to use only any one of the fourth identifier (for example, B23) and the fifth identifier (for example, B7) to indicate whether the bandwidth for sending the second message frame TB-PPDU is 240 MHz or 320 MHz.

In an embodiment of the present disclosure, it is possible to use only any one of the fourth identifier (for example, B23) and the fifth identifier (for example, B7) to indicate that the bandwidth for sending the second message frame is the IEEE802.11ax standard (20MHz, 40MHz, 80MHz, 160 (80+80) MHz), or the IEEE802.11be standard (240 (160+80) MHz, 320 (160+160) MHz).

For example, the fourth identifier (for example, B23) is used to represent that the bandwidth for sending the second message frame is the IEEE802.11ax standard (20MHz, 40MHz, 80MHz, 160 (80+80) MHz) or the IEEE802.11be standard (240 (160+80) MHz, 320 (160+160) MHz), which can solve the backward compatibility problem in the IEEE802.11ax standard. According to an example embodiment of the present disclosure, in the IEEE802.11ax standard, the bit of B23 is a reserved bit and is set to "1", and if it is compatible backward, when another receiving terminal device in the IEEE802.11ax standard receives the second message frame and detects that the bit is not set to "1", it can know that the second message frame is sent by the bandwidth in the IEEE802.11be standard (240 (160+80) MHz, 320 (160+160) MHz), and can discard the remainder of the second message frame since the receiving terminal device does not support the IEEE802.11be standard.

Therefore, the fourth identifier and the fifth identifier may be used together, and also may be used independently.

As another example, the fourth identifier and the fifth identifier may be located in a single signaling field of TB-PPDU. For example, the below Table 4 illustrates an example form of TB-PPDU. The fourth identifier and the fifth identifier may be located in a "U-SIG" signaling field of Table 4. That is, values of the fourth identifier and the fifth identifier included in the "U-SIG" signaling field may be set based on the first identifier and the second identifier. The descriptions with respect to the fourth identifier and the fifth identifier in the above example may be applied here, which will be omitted for conciseness.

**Table 4**

| | | | | | | | |
|---|---|---|---|---|---|---|---|
| L-STF | L-LTF | L-SIG | RL-SIG | U-SIG | EHT-STF | EHT-LTF | DATA |

In addition, TB-PPDU may include a sixth identifier. As an example, the sixth identifier may include one or more subfields included in a specific field of TB-PPDU (for example, DATA in Table 4), which may be configured corresponding to the first identifier (for example, the UL BW subfield of the trigger message frame). As one example, the sixth identifier may be configured consistent with the first identifier (the value of the UL BW subfield). However, this is merely illustrative, which is not limited in embodiments of the present disclosure. For example, the sixth identifier may be a specific value different from the first identifier. The sixth identifier (for example, one or more subfields in a data field) is configured corresponding to the UL BW subfield of the trigger message frame, so that another STA determines a bandwidth used by the STA for sending TB-PPDU, thereby avoiding conflicts.

With the method described in the embodiment of the present disclosure as illustrated in FIG. 2 to FIG. 4, not only the bandwidth in the existing standard (for example, the IEEE802.11ax standard) can be identified, but also the additional bandwidth in the advanced standard (for example, the IEEE802.11be standard, which will not be limited here) can be identified, so that the additional bandwidth may be applied in wireless communication, which improves throughput.

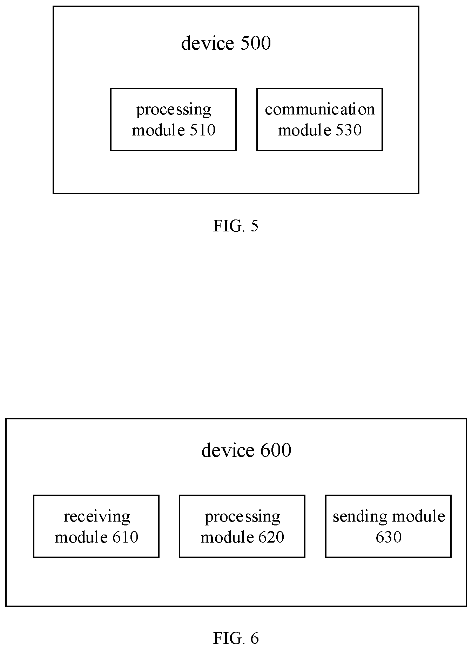

FIG. 5 is a diagram illustrating a device 500 for identifying a bandwidth according to an embodiment of the present disclosure.

As illustrated in FIG. 5, the device 500 (for example, an AP) in the embodiment of the present disclosure may include a processing module 510 and a communication module 530. It may be understood that the configuration of the device 500 as illustrated in FIG. 5 is only illustrative, and the device for identifying a bandwidth according to an embodiment of the present disclosure may include more or fewer modules.

According to an embodiment of the present disclosure, the processing module 510 may be configured to determine a first message frame, in which the first message frame includes bandwidth information, and the bandwidth information is configured to such that a device receiving the first message frame sets a bandwidth for sending a second message frame. In other words, the processing module 510 may perform the operation of step 210 in FIG. 2, which will be omitted for conciseness.

According to an embodiment of the present disclosure, the communication module 530 may be configured to transmit the first message frame. In other words, the communication module 530 may perform the operation of step 220 in FIG. 2, which will be omitted for conciseness.

In addition, the first message frame and the second message frame as described in FIG. 2 to FIG. 4 may be applied to FIG. 5, which will be omitted for conciseness.

FIG. 6 is a diagram illustrating a device 600 for identifying a bandwidth according to an embodiment of the present disclosure.

As illustrated in FIG. 6, the device 600 according to the embodiment of the present disclosure (for example, a STA) may include a receiving module 610, a processing module 620 and a sending module 630. It may be understood that the configuration of the device 600 for identifying a bandwidth as illustrated in FIG. 6 is only illustrative, and the device for identifying a bandwidth according to an embodiment of the present disclosure may include more or fewer modules.

According to an embodiment of the present disclosure, the receiving module 610 may be configured to receive a first message frame, in which the first message frame includes bandwidth information. In other words, the receiving module 610 may perform the operation of step 310 in FIG. 3, which will be omitted for conciseness.

According to an embodiment of the present disclosure, the processing module 620 may be configured to determine a second message frame based on bandwidth information. In other words, the processing module 620 may perform the operation of step 320 in FIG. 3, which will be omitted for conciseness.

According to an embodiment of the present disclosure, the sending module 630 may be configured to set a bandwidth for sending the second message frame based on the bandwidth information and send the second message frame. In other words, the sending module 630 may perform the operation of step 330 in FIG. 3, which will be omitted for conciseness.

In addition, the first message frame and the second message frame as described in FIG. 2 to FIG. 4 may be applied to FIG. 6, which will be omitted for conciseness. In addition, "modules" in FIG. 5 and FIG. 6 may be implemented in combination of software and/or hardware, which will not be limited in embodiments of the present disclosure.

Based on the principle the same with the method provided in embodiments of the present disclosure, an electronic device is further provided in an embodiment of the present disclosure. The electronic device includes a processor and a memory; the memory is stored with machine-readable instructions (also referred to as "a computer program"); the processor is configured to execute machine-readable instructions to implement any methods as illustrated in FIG. 2 and FIG. 3. As an example, the electronic device may be a part of a device for identifying a bandwidth, however, it is not limited in embodiments of the present disclosure, for example, the electronic device may be other nodes separated from the device for identifying a bandwidth.

A computer readable storage medium with a computer program stored thereon is further provided in an embodiment of the present disclosure. When the computer program is executed by a processor, any one method as illustrated in FIG. 2 and FIG. 3 is implemented.

In an example embodiment, the processor may be configured to implement or execute various exemplary logical boxes, modules, and circuits described in conjunction with the contents in the present disclosure, for example, a central processing unit (CPU), a universal processor, a digital signal processor (DSP), an application specific integrated circuit(ASIC), a field programmable gate array(FPGA) or other programmable logic device, a transistor logic device, a hardware component or any other combination. The processor may be a combination that implement a computation function, for example, a combination of one or more microprocessors, a combination of DSPs and microprocessors, etc.

In an example embodiment, the memory may be, for example, a Read Only Memory (ROM), a Random Access Memory (RAM ), an Electrically Erasable Programmable Read Only Memory(EEPROM), a Compact Disc Read Only Memory(CD-ROM) or other disc memory, a disc memory (including a compact disc, a laser disc, an optical disc, a universal digital disc, a Blu-ray disc, etc.), a disk storage medium, or other magnetic storage devices, or any other medium that may be used to carry or store program codes in the form of instructions or data structures and that may be accessed by a computer, which is not limited here.

It should be understood that although steps in the flowchart of the attached drawings are sequentially displayed based on the indication of the arrows, these steps are not necessarily executed in the sequence indicated by the arrows. Unless explicitly stated herein, these steps are not executed in a strict sequence, and may be executed in other sequences. In addition, at least some of steps in the flowchart of the attached drawings may include a plurality of sub-steps or a plurality of stages, these sub-steps or stages are not necessarily executed at the same moment, but may be executed at different moments, and the execution sequence thereof is also not necessarily performed in sequence, but may be performed in turn or alternately with at least one part of other steps or sub-steps of other steps or stages.

Although the present disclosure has been shown and described referring to some embodiments of the present disclosure, it may be understood by those skilled in the art that various changes may be made in form and detail without departing from the scope of the present disclosure. Therefore, the scope of the present disclosure shall not be limited to embodiments, but defined by the attached claims and their equivalents.

## Claims

1. A method for identifying a bandwidth, comprising:
determining a first message frame, wherein, the first message frame comprises bandwidth information, and the bandwidth information is configured such that a device receiving the first message frame sets a bandwidth for sending a second message frame; and
transmitting the first message frame.

2. The method of claim 1, wherein,
the bandwidth information comprises: a first identifier and/or a second identifier configured to indicate the bandwidth information.

3. The method of claim 2, wherein,
the bandwidth information corresponding to the first identifier is a first value and the bandwidth information corresponding to the second identifier is a second value, and the bandwidth is a first type of bandwidth.

4. The method of claim 2, wherein,
the bandwidth information corresponding to the first identifier is a third value and the bandwidth information corresponding to the second identifier is a fourth value, and the bandwidth is a second type of bandwidth.

5. The method of claim 1 or 2, wherein, the bandwidth information further comprises: a third identifier configured to indicate a type of the first message frame.

6. The method of claim 5, wherein, the third identifier is configured to indicate whether to continue decoding the first message frame.

7. The method of claim 3 or 4, wherein, the second message frame comprises: a fourth identifier and/or a fifth identifier configured to indicate the bandwidth information.

8. The method of claim 7, wherein,
the bandwidth information corresponding to the fourth identifier is a fifth value and the bandwidth information corresponding to the fifth identifier is a sixth value in response to the bandwidth information corresponding to the first identifier being a first value and the bandwidth information corresponding to the second identifier being a second value.

9. The method of claim 7, wherein,
the bandwidth information corresponding to the fourth identifier is a seventh value and the bandwidth information corresponding to the fifth identifier is an eighth value in response to the bandwidth information corresponding to the first identifier being a third value and the bandwidth information corresponding to the second identifier being a fourth value.

10. The method of claim 3 or 4, wherein, the first type of bandwidth is 240MHz or 160MHz+80MHz, and the second type of bandwidth is 320MHz or 160MHz+160MHz.

11. A method for identifying a bandwidth, comprising:
receiving a first message frame, wherein, the first message frame comprises bandwidth information;
determining a second message frame based on the bandwidth information; and
setting a bandwidth for sending the second message frame based on the bandwidth information and sending the second message frame.

12. The method of claim 11, wherein, the bandwidth information comprises: a first identifier and/or a second identifier configured to indicate the bandwidth information.

13. The method of claim 12, wherein,
the bandwidth information corresponding to the first identifier is a first value and the bandwidth information corresponding to the second identifier is a second value, and the bandwidth is a first type of bandwidth.

14. The method of claim 12, wherein,
the bandwidth information corresponding to the first identifier is a third value and the bandwidth information corresponding to the second identifier is a fourth value, and the bandwidth is a second type of bandwidth.

15. The method of claim 11 or 12, wherein, the first message frame further comprises: a third identifier configured to indicate a type of the first message frame.

16. The method of claim 15, wherein, the third identifier is configured to indicate whether to continue decoding the first message frame.

17. The method of claim 13 or 14, wherein, the second message frame comprises: a fourth identifier and/or a fifth identifier configured to indicate the bandwidth information.

18. The method of claim 17, wherein, determining the second message frame based on the bandwidth information, comprises:
the bandwidth information corresponding to the fourth identifier is a fifth value and the bandwidth information corresponding to the fifth identifier is a sixth value in response to the bandwidth information corresponding to the first identifier being a first value and the bandwidth information corresponding to the second identifier being a second value.

19. The method of claim 17, wherein, determining the second message frame based on the bandwidth information, comprises:
the bandwidth information corresponding to the fourth identifier is a seventh value and the bandwidth information corresponding to the fifth identifier is an eighth value in response to the bandwidth information corresponding to the first identifier being a third value and the bandwidth information corresponding to the second identifier being a fourth value.

20. The method of claim 13 or 14, wherein, the first bandwidth is 240MHz or 160MHz+80MHz, and the second bandwidth is 320MHz or 160MHz+160MHz.

21. A device for identifying a bandwidth, comprising:
a processing module, configured to determine a first message frame, wherein, the first message frame comprises bandwidth information, and the bandwidth information is configured to set by a device receiving the first message frame a bandwidth sending a second message frame; and
a communication module, configured to transmit the first message frame.

22. A device for identifying a bandwidth, comprising:
a receiving module, configured to receive a first message frame, wherein, the first message frame comprises bandwidth information;
a processing module, configured to determine a second message frame based on the bandwidth information; and
a sending module, configured to set a bandwidth of the second message frame based on the bandwidth information and send the second message frame.

23. An electronic device, comprising a memory, a processor and a computer program stored on the memory and executable on the processor, wherein, when the processor executes the computer program, the method of any one of claims 1 to 10 is implemented.

24. A computer readable storage medium with a computer program stored thereon, wherein when the computer program is executed by a processor, the method of any one of claims 1 to 10 is implemented.

25. An electronic device, comprising a memory, a processor and a computer program stored on the memory and executable on the processor, wherein, when the processor executes the computer program, the method of any one of claims 11 to 20 is implemented.

26. A computer readable storage medium with a computer program stored thereon, wherein when the computer program is executed by a processor, the method of any one of claims 11 to 20 is implemented.
